# EUROPÄISCHE PATENTSCHRIFT

(11) **EP 4 610 219 B1**
(45) Veröffentlichungstag und Bekanntmachung des Hinweises auf die Patenterteilung: **02.12.2026**
(21) Anmeldenummer: 24160321.6
(22) Anmeldetag: 28.02.2024
(51) Int. Cl.: C01B 3/00, G01N 9/36, G01N 29/024

(54) **VERFAHREN ZUR BESTIMMUNG DES HYDRIERGRADS EINES WÄSSRIGEN REAKTIONSSYSTEMS DER KOMPONENTEN FORMIATSALZ, HYDROGENCARBONATSALZ UND CARBONATSALZ**
METHOD FOR DETERMINING HYDROGENATION DEGREE OF AQUEOUS REACTION SYSTEM OF FORMATE SALT COMPONENTS, HYDROGEN CARBONATE SALT, AND CARBONATE SALT
PROCÉDÉ DE DÉTERMINATION DE L'HYDRATABILITÉ D'UN SYSTÈME DE RÉACTION AQUEUX DES COMPOSANTS DU SEL DE FORMIATE, SEL D'HYDROGÉNOCARBONATE ET SEL DE CARBONATE

(43) Veröffentlichungstag der Anmeldung: 03.09.2025
(73) Patentinhaber: AKROS Energy GmbH, 18299 Rostock-Laage (DE)
(72) Erfinder: Massa, Jonas, 18299 Rostock-Laage (DE); Turan, Volkan, 18299 Rostock-Laage (DE); Sponholz, Peter, 18299 Rostock-Laage (DE)
(74) Vertreter: Hoffmann Eitle

(56) Entgegenhaltungen:
- WO-A1-2016/075077
- WO-A1-2023/275578

## Beschreibung

Die Erfindung betrifft ein Verfahren zur Bestimmung des Wasserstoffgehalts eines reversiblen Wasserstoffspeichersystems auf Basis von Formiat- Hydrogencarbonat und Carbonat-Salzen in einem wässrigen Reaktionssystem sowie eine Vorrichtung zur Erfassung des Wasserstoffgehalts.

### Stand der Technik

Mit vielfältigen Methoden wird versucht, Energie zu gewinnen und in Form von Wasserstoff zu speichern. Bei diesen Verfahren wird der Wasserstoff z.B. über Elektrolyse, Photolyse oder Thermolyse gewonnen. Alle Verfahren der Energiegewinnung aus regenerativen Energien in den Bereichen Solar- und Windenergie stellen keine vergleichbar kontinuierlich verfügbare Energiequelle dar, wie es die Fossile Energie oder Atomkraft sind. Erst durch den Einsatz eines Puffers, wie z.B. Wasserstoff, als Energiespeicher wird eine kontinuierliche Verfügbarkeit der gewonnenen Energie erreicht, die als elektrische oder thermische Energie bei Bedarf genutzt werden kann. Daher rückt Wasserstoff als nachhaltiger Energieträger immer stärker in den Fokus. Durch die vielseitigen Einsatzmöglichkeiten von Wasserstoff in diversen Sektoren wie Industrie, Mobilität, Gebäuden und Energieversorgung wird dieses zunehmend als wichtiger Baustein einer Energiewende hin zur kohlenstoffdioxidneutralen Energiewirtschaft angesehen.

Der entscheidende Nachteil von gasförmigem Wasserstoff liegt in seiner geringen Dichte. Dies führt bereits bei geringen Mengen zu riesigen Volumen. Eine erhöhte Dichte wird durch eine energieintensive Komprimierung auf bis zu 700 bar oder einer Tieftemperaturverflüssigung bei minus 253 °C, erreicht, damit der Wasserstoff energiedicht gelagert werden kann. Diese Verfahren stellen neben dem energetischen Aufwand für die Speicherung auch weitere Hürden für den breiten Einsatz des Wasserstoffs dar, da der Wasserstoff weiterhin als brennbarer Stoff vorliegt und somit ein Gefahrenpotential darstellt. Überdies hinaus ist die Praktikabilität beim Einsatz als Energieträger eingeschränkt, da dieser durch die hohen Drücke oder tiefkalten Temperaturen nur eingeschränkt handhabbar ist.

Diese Nachteile werden technisch durch die chemische Bindung des Wasserstoffs an Trägerstoffen umgangen. Im Bereich der chemischen Wasserstoffspeicherung sind aus dem Stand der Technik unterschiedliche Technologien bekannt, die auf verschiedenen Wasserstoffträgermaterialien, wie beispielsweise Kohlenstoffdioxid, Stickstoff oder Hydrogencarbonat basieren. Dabei wird beispielsweise Wasserstoff an einen entladenen Wasserstoffträger gebunden und dadurch der beladene Wasserstoffträger erzeugt und bei Bedarf wird der beladene Wasserstoffträger dann wieder in den entladenen Wasserstoffträger überführt, wobei der Wasserstoff wieder freigesetzt wird. Auf diese Weise kann der Wasserstoff als Energieträger eine Vielzahl von Anwendung zusätzlich bedienen, die durch herkömmliche physikalische Methoden nur bedingt abgedeckt werden können. Die Druckschrift WO 2023/275578 A1 beispielsweise beschreibt ein Verfahren zur Hydrierung von Hydrogencarbonat in einem wässrigen Reaktionssystem, wobei das Verfahren dafür sorgt, dass Hydrogencarbonat, Wasserstoff und Katalysator miteinander in Kontakt kommen, während sich Kohlendioxid im Gasraum befindet. In dieser Phase des Prozesses entsteht Formiat. Nachfolgend erfolgt die katalytische Zersetzung des Formiats in einem wässrigen Reaktionssystem und die Hydrierung von im selben Reaktionssystem erzeugten Hydrogencarbonat, wobei die Reaktanten und die Reaktionsprodukte in einer reversiblen Reaktion entstehen. Bei dem Formiatzersetzungsprozess kommen das Formiat und der Katalysator in Kontakt, so dass als Reaktionsprodukt Wasserstoffgas und Hydrogencarbonat entstehen. Ebenfalls offenbart wird ein Wasserstoffspeichersystem basierend auf dem beschriebenen Verfahren.

In der Druckschrift US 2008/0138674 A1 wird ein Verfahren beschrieben, bei dem ein fester Träger, der als reversibler Wasserstoffträger fungiert, in einen Kraftstoffspeichertank oder - behälter geladen und daraus entladen wird, um eine gasförmige Wasserstoffkraftstoffquelle für die Verwendung in Kraftfahrzeugen bereitzustellen. Der teilchenförmige feste Träger kann beispielsweise ein mikroporöses wasserstoffabsorbierendes Material, ein Metalllegierungshydrid, oder ein komplexes Metallhydrid sein.

Die WO 2023/275578 beschreibt die reversible Umwandlung von Hydrogencarbonat und Formiat in einem wässrigen Wasserstoffspeichersystem.

In all diesen Anwendungen werden ein oder mehrere Reaktionsräume verwendet, in denen der Wasserstoff entweder an den entladenen Wasserstoffträger gebunden oder aus dem beladenem Wasserstoffträger freigesetzt wird. Eine schnelle und genaue Analytik ist daher unabdingbar, um die Prozesse zu steuern oder den Ladezustand des Systems angeben zu können. Der Ladezustand des Wasserstoffspeichersystems wird hierbei durch den Hydriergrad beschrieben, welcher das Verhältnis vom hydrierten (beladenen) Wasserstoffträger zur Gesamtstoffmenge des Wasserstoffträgermaterials ausdrückt. Es ist bereits bekannt, dass mittels etablierter Analyseverfahren, wie Kernspinresonanzspektroskopie und Infrarotspektroskopie, der Hydriergrad bestimmt werden kann. Nachteilig an diesen Analyseverfahren ist jedoch, dass diese Zeit- und Kosten-intensiv sind.

In der WO 2016/075077 A1 (EP 3 218 711 B1) wird ein Verfahren zum Erfassen eines Hydriergrades einer Flüssigkeit, die einen oder mehrere hydrierbare flüssige Wasserstoffträger umfasst, offenbart, bei welchem die Stoffeigenschaft einer Flüssigkeit erfasst und der Hydriergrad der Flüssigkeit auf Basis der erfassten Stoffeigenschaft der Flüssigkeit bestimmt wird. Die Flüssigkeit kann dabei eine Mischung aus einer ungesättigten zyklischen Kohlenwasserstoffverbindung und einer zumindest teilweise hydrierten ungesättigten zyklischen Kohlenwasserstoffverbindung sein. Nachteilig an dem in der WO 2016/075077 A1 beschriebenen Verfahren ist, dass keine Nebenproduktanalyse möglich ist und nur für das entsprechende Reaktionssystem bestehend aus ungesättigten zyklischen Kohlenwasserstoffverbindungen anwendbar ist. Darüber hinaus lässt sich mit dem dort offenbarten Verfahren nicht die absolute Wasserstoffspeicherdichte bestimmen, da diese bei ungesättigten zyklischen Kohlenwasserstoffen annähernd konstant ist.

Vor diesem Hintergrund ist es eine Aufgabe der vorliegenden Erfindung, ein Verfahren und eine Vorrichtung zur Bestimmung eines Hydriergrads sowie die absolute Gesamtsalzkonzentration einer flüssigen, wässrigen Wasserstoffträgerlösung bereitzustellen, welche mittels einfacher Messgeräte, wie zum Beispiel einer Schwingmessung zur Dichtebestimmung, durchgeführt werden können. Dadurch ist es möglich, kostenintensive Sonderlösungen zu vermeiden und die Analytik apparativ einfach und in großen Mengen durchzuführen.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

### Kurzbeschreibung der Figuren

Ausführungsbeispiele der Erfindung sind in den Zeichnungen dargestellt und werden im Folgenden näher beschrieben.

Es zeigen:
Fig. 1: eine schematische Darstellung des Formiat/Carbonat-Reaktionssystems zu Beladung und Entladung von Wasserstoff im wässrigen Reaktionssystem;
Fig. 2: eine schematische Ansicht einer Vorrichtung zum Erfassen eines Hydriergrades eines wässrigen Reaktionssystems;
Fig. 3: eine räumliche Auftragung des Parameterraums der Dichte;
Fig. 4: eine räumliche Auftragung des Parameterraums der Leitfähigkeit;
Fig. 5: eine Schnittmenge der Isolinie der Dichte und der Isolinie Leitfähigkeit.

### Offenbarung der Erfindung

Gemäß einem ersten Aspekt der Erfindung wird die Aufgabe durch ein Verfahren zum Bestimmen des Hydriergrades eines wässrigen Reaktionssystems der Komponenten Formiatsalz (A₁HCOO), Hydrogencarbonatsalz (A₂HCO₃), und Carbonatsalz (A₃CO₃) gelöst, wobei A₁, A₂ und A₃ Gegenionen sind, mit den Schritten:
- Erfassung von mindestens einem funktionellen Zusammenhang zwischen jeweils einer Stoffeigenschaft und wässrigen Konzentrationen der Komponenten;
- Erfassung von mindestens einer Stoffeigenschaft des wässrigen Reaktionssystems;
- Bestimmen der Konzentrationen von den Komponenten des wässrigen Reaktionssystems durch
   (i) den mindestens einen funktionellen Zusammenhang und der mindestens einen erfassten Stoffeigenschaft des wässrigen Reaktionssystems und,
   optional, (ii) eine oder mehr Randbedingungen,
wobei die Summe der mindestens einen erfassten Stoffeigenschaften des wässrigen Reaktionssystems und der einen oder mehr Randbedingungen der Anzahl der Komponenten des wässrigen Reaktionssystems entspricht; und
- Bestimmen des Hydriergrades des wässrigen Reaktionssystems aus den Konzentrationen der Komponenten des wässrigen Reaktionssystems,
wobei der Hydriergrad das Verhältnis der Formiatkonzentration zur Summe aus Formiat-, und Hydrogencarbonatkonzentration widerspiegelt.

Unter dem Begriff "Hydriergrad" (HG) im Sinne der vorliegenden Anmeldung wird der Grad der Wasserstoffbeladung des Wasserstoffspeichermaterials beschrieben. Bei einem nicht mit Wasserstoff beladenem Wasserstoffträger mit einer maximal nutzbaren Kapazität an Wasserstoff beträgt der Hydriergrad 0. $HG = \frac{nutzbare beladene Wasserstoffspeicherkapazität}{maximal nutzbare Wasserstoffspeicherkapazität} = \frac{\left[Formiat\right]}{\left[Formiat\right] + \left[Hydrogencarbonat\right]}$

Carbonat, welches nicht fähig ist Wasserstoff zu speichern, wird bei Bestimmung des Hydriergrades nicht berücksichtigt. Bei einem vollständig mit Wasserstoff beladenem Wasserstoffträger, bei dem alle Moleküle in die Wasserstoffbeladene Form (Formiat) überführt worden, beträgt der Hydriergrad 1.

Das wässrige Reaktionssystem der Komponenten Formiatsalz (A₁HCOO), Hydrogencarbonatsalz (A₂HCO₃), und Carbonatsalz (A₃CO₃), wobei A₁, A₂ und A₃ Gegenionen sind, umfasst die Komponenten Formiatsalz (A₁HCOO), Hydrogencarbonatsalz (A₂HCO₃), und Carbonatsalz (A₃CO₃). Sofern keine abweichenden Angaben vorliegen oder sich aus dem Zusammenhang ergeben, beziehen sich die Begriffe "das wässrige Reaktionssystem" und "das Reaktionssystem" auf dasselbe. Das wässrige Reaktionssystem besteht vorzugsweise substantiell aus den Komponenten Formiatsalz (A₁HCOO), Hydrogencarbonatsalz (A₂HCO₃), und Carbonatsalz (A₃CO₃). Vorzugsweise umfasst das Reaktionssystem zu 75 wt% oder mehr die Komponenten Formiatsalz (A₁HCOO), Hydrogencarbonatsalz (A₂HCO₃), und Carbonatsalz (A₃CO₃), in einer noch mehr bevorzugten Ausführungsform umfasst das Reaktionssystem zu 80 wt% oder mehr die Komponenten, in einer noch mehr bevorzugten Ausführungsform umfasst das Reaktionssystem zu 90 wt% oder mehr die Komponenten, in einer noch mehr bevorzugten Ausführungsform umfasst das Reaktionssystem zu 95 wt% oder mehr die Komponenten, in einer noch mehr bevorzugten Ausführungsform umfasst das Reaktionssystem zu 99 wt% oder mehr die Komponenten, und in einer noch mehr bevorzugten Ausführungsform umfasst das Reaktionssystem zu 99.9 wt% oder mehr die Komponenten. Die oben genannten wt% beziehen sich auf die Gesamttrockenmasse des Reaktionssystems abzüglich des Lösungsmittels Wasser, vorzüglich nur die Salze. In einer besonders bevorzugten Ausführungsform sind A₁, A₂ und A₃ gleich.

Das vorliegende Verfahren umfasst einen Schritt der Erfassung von mindestens einem funktionellen Zusammenhang zwischen jeweils einer Stoffeigenschaft und wässrigen Konzentrationen der Komponenten. Vorzugsweise sind die Stoffeigenschaften thermophysikalische Messgrößen. Ein solcher funktioneller Zusammenhang wird typischerweise mittels Referenzlösungen ermittelt, in denen die wässrige Konzentration der Komponenten variiert wird. Vorzugsweise sind A₁, A₂ und A₃ im wässrigen Reaktionssystem gleich und gleichen den Gegenionen in der Referenzlösung. Der funktionelle Zusammenhang wird dann zwischen gemessenen Werten der Stoffeigenschaft und den wässrigen Konzentrationen der Komponenten hergestellt. Typischerweise ist der funktionelle Zusammenhang ein mathematischer Ausdruck der Stoffeigenschaft, welcher von den wässrigen Konzentrationen der Komponenten und, optional, der Temperatur abhängig ist. Unter den Ausdruck "Erfassung von mindestens einem funktionellen Zusammenhang" fallen sowohl die eigenständige Ermittlung eines funktionellen Zusammenhangs als auch die Bereitstellung eines bereits existierenden funktionellen Zusammenhangs, zB durch Erfassung aus der wissenschaftlichen Literatur oder Standardtabellen.

In einer bevorzugten Ausführungsform ist der mindestens eine funktionelle Zusammenhang zwischen einer Stoffeigenschaft und wässrigen Konzentrationen der Komponenten linear oder nicht-linear. Zur Erfassung des funktionellen Zusammenhangs können polynomiale, logarithmische, exponentielle, oder trigonometrische Ansatzfunktionen benutzt werden.

Das vorliegende Verfahren umfasst einen weiteren Schritt der Erfassung von mindestens einer Stoffeigenschaft des wässrigen Reaktionssystems. Typischerweise ist diese eine Stoffeigenschaft, für die ein entsprechender funktioneller Zusammenhang erfasst wurde oder wird. In einer bevorzugten Ausführungsform ist die erfasste Stoffeigenschaft die gleiche Stoffeigenschaft wie die für die ein funktioneller Zusammenhang erfasst wurde oder wird. Typischerweise gleicht die Anzahl der erfassten Stoffeigenschaften der Anzahl der funktionellen Zusammenhänge, die erfasst wurden oder werden.

Für die beiden oben beschriebenen Schritte liegt keine besondere Reihenfolge vor.

Das vorliegende Verfahren umfasst einen weiteren Schritt des Bestimmens der Konzentration von den Komponenten des wässrigen Reaktionssystems durch (i) den mindestens einen funktionellen Zusammenhang und der mindestens einen erfassten Stoffeigenschaft des wässrigen Reaktionssystems und, optional (ii) eine oder mehr Randbedingungen, wobei die Summe der mindestens einen erfassten Stoffeigenschaften des wässrigen Reaktionssystems und der einen oder mehr Randbedingungen der Anzahl der Komponenten des wässrigen Reaktionssystems entspricht. Mathematisch kann dies durch die Formel: 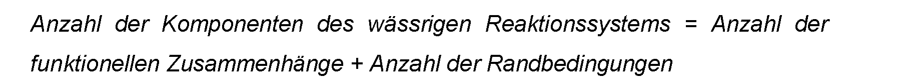 Anzahl der Komponenten des wässrigen Reaktionssystems = Anzahl der funktionellen Zusammenhänge + Anzahl der Randbedingungen dargestellt werden. Für ein 3-Komponentensystem, zB Formiat, Hydrogencarbonat und Carbonat, wären die Konzentrationen der Komponenten bestimmbar aus (i) drei erfassten Stoffeigenschaften des wässrigen Reaktionssystems und drei funktionellen Zusammenhängen zwischen jeweils einer Stoffeigenschaft und wässrigen Konzentrationen der Komponenten, (ii) zwei erfassten Stoffeigenschaften des wässrigen Reaktionssystems und zwei funktionellen Zusammenhängen zwischen jeweils einer Stoffeigenschaft und wässrigen Konzentrationen der Komponenten sowie einer Randbedingung, und (iii) einer erfassten Stoffeigenschaften des wässrigen Reaktionssystem und einem funktionellen Zusammenhang zwischen einer Stoffeigenschaft und wässrigen Konzentrationen der Komponenten sowie zwei Randbedingungen. Die Bestimmung der Konzentrationen der Komponenten wird typischerweise durch Überschneidung der Parameterräume bzw. Lösung des sich ergebenden Gleichungssystems erreicht. Die Lösung kann analytisch oder numerisch durchgeführt werden.

Sofern keine abweichenden Angaben vorliegen oder sich aus dem Zusammenhang ergeben, ist mit "die Konzentration" eine wässrige Konzentration gemeint.

Das vorliegende Verfahren umfasst einen weiteren Schritt des Bestimmen des Hydriergrades des wässrigen Reaktionssystems aus den Konzentrationen der Komponenten des wässrigen Reaktionssystems. Dabei wird die oben beschriebene Formel benutzt.

Mit Hilfe des erfindungsgemäßen Verfahrens wird der technische Vorteil erreicht, dass der Hydriergrad eines wässrigen Reaktionssystems auf Basis von Formiat/Hydrogencarbonat/Carbonat-Salzen mithilfe einer Kombination von erfassten Stoffeigenschaften bestimmt werden kann. Bei einem Mehrkomponentensystem, beispielsweise einer Mischung mit zumindest zwei Stoffen, ist es generell schwer mit nur einer erfassten Stoffeigenschaft eine eindeutige Konzentrationsbestimmung der Stoffe in der Mischung durchzuführen. Es wurde nun gefunden, dass für das oben beschriebene wässrige Reaktionssystem, der Hydriergrad ausgehend von erfassten Stoffeigenschaften oder mindestens einer erfassten Stoffeigenschaft in Verbindung mit mindestens einer Randbedingung bestimmt werden kann. Das vorliegende Verfahren kann somit schnell und kosteneffektiv zu einer Bestimmung des Hydriergrades führen.

In einer bevorzugten Ausführungsform sind die eine oder mehr Randbedingungen a. die Vernachlässigung der Carbonatkonzentration und/oder b. die Ermittlung einer Komponentenkonzentration ausgehend von den Startkonzentrationen der Komponenten und dem Reaktionsverlauf, wobei wenn zwei Randbedingungen zum Bestimmen der Konzentrationen von den Komponenten des wässrigen Reaktionssystems benutzt werden, eine Randbedingung die Vernachlässigung der Carbonatkonzentration ist.

So ist ein Drei-Komponentensystem, z.B. das Formiat/Hydrogencarbonat/Carbonat-Reaktionssystem, beispielsweise durch 1) die Erfassung von zwei funktionellen Zusammenhängen zwischen jeweils einer Stoffeigenschaft und wässrigen Konzentrationen der Komponenten und 2) die Erfassung von zwei Stoffeigenschaften des wässrigen Reaktionssystems sowie 3) der Randbedingung a., dass die Carbonatkonzentration vernachlässigt wird, bestimmbar. Durch diese Randbedingung der Vernachlässigung wird das Drei-Komponentensystem zu einem Quasi-Zwei-Komponentensystem, wodurch die Konzentration von Formiat und Hydrogencarbonat mittels der zwei Stoffeigenschaften und funktionellen Zusammenhänge bestimmt werden kann. Ebenso ist das System bestimmbar, wenn anstelle der Randbedingung a. die Randbedingung b., also die Ermittlung einer Komponentenkonzentration ausgehend von den Startkonzentrationen der Komponenten und dem Reaktionsverlauf, angewendet wird. Der Reaktionsverlauf kann von der Stöchiometrie der vorliegenden Reaktionen im Reaktionssystem festgelegt werden. Ausgehend von den Startkonzentrationen (t=0) der Komponenten lässt sich somit die ist-Konzentration (t) einer Komponente durch die ist-Konzentration der anderen Komponenten antizipieren. Beispielsweise lässt sich die Carbonatkonzentration abhängig von den Startkonzentrationen der Komponenten und den ist-Konzentrationen von Hydrogencarbonat und Formiat mit der Formel ${c}_{{K}_{2} {CO}_{3}} = \frac{{c}_{{KHCO}_{2}} - {c}_{Start , {KHCO}_{2}} + {c}_{Start , {KHCO}_{3}} + {c}_{{KHCO}_{3}} + 2 ∗ {c}_{Start , {K}_{2} {CO}_{3}}}{2}$ beschreiben.

Ebenso lässt sich beispielsweise die Formiatkonzentration abhängig von den Startkonzentrationen der Komponenten und den ist-Konzentrationen von Hydrogencarbonat und Carbonat mit der Formel ${c}_{{KHCO}_{2}} = \left({c}_{Start , {KHCO}_{2}}-{c}_{Start , {KHCO}_{3}}\right) - {c}_{{KHCO}_{3}} - 2 ∗ \left({c}_{Start , {K}_{2} {CO}_{3}}-{c}_{{K}_{2} {CO}_{3}}\right)$ beschreiben. Ebenso ist das System ausgehend von nur einer Stoffeigenschaft und einem funktionellen Zusammenhang bestimmbar, indem beide Randbedingungen a. und b. angewendet werden. Vorzugsweise werden mindestens zwei Stoffeigenschaften und zwei entsprechende funktionelle Zusammenhänge angewendet.

Das Konzept wird anhand einer Fomiat/Hydrogencarbonat-Lösung (Quasi-Zweistoffsystem) näher beschrieben, da es bei nur zwei Salzen möglich ist die Parameterräume und Schnittmenge grafisch darzustellen. In diesem Fall werden die Randbedingung a. und zwei Stoffeigenschaften sowie entsprechende funktionelle Zusammenhänge angewendet. Beispielsweise sind dies die Dichte und die Leitfähigkeit. Generell sind die Dichte und die elektrische Leitfähigkeit mehrdimensionale Funktionen der Konzentrationen der Komponenten. Durch die spezifischen Messwerte der Lösungen (Dichte und Leitfähigkeit) wird der Parameterraum hinsichtlich der möglichen Konzentrationspaarungen der einzelnen Salze eingeengt. Durch die anschließende Überlappung der beiden Parameterräume kann eine Schnittmenge bestimmt werden, aus der, im Falle einer Salzlösung aus Hydrogencarbonat und Formiat, die einzelnen Konzentrationen der Salze hervorgehen.

Der folgende funktionelle Zusammenhang (I) für die Stoffeigenschaft Dichte wurde für die Kaliumsalze ermittelt: $\begin{matrix}ρ \left[\frac{g}{{cm}^{3}}\right] = 1 , 015134164 \\ + 0 , 057475788 ∗ {c}_{{KHCO}_{3}} \\ + 0 , 040514213 ∗ {c}_{{KHCO}_{2}} \\ + 0 , 103596824 ∗ {c}_{{K}_{2} {CO}_{3}} \\ - 0 , 000411644 ∗ T \left[°C\right]\end{matrix}$ (I)
*c*_{*KHCO*₃} = *Kaliumhydrogencarbonat*
*c*_{*KHCO*₂} = *Kaliumformiat*
*c*_{*K*₂*CO*₃} = *Kaliumcarbonat*

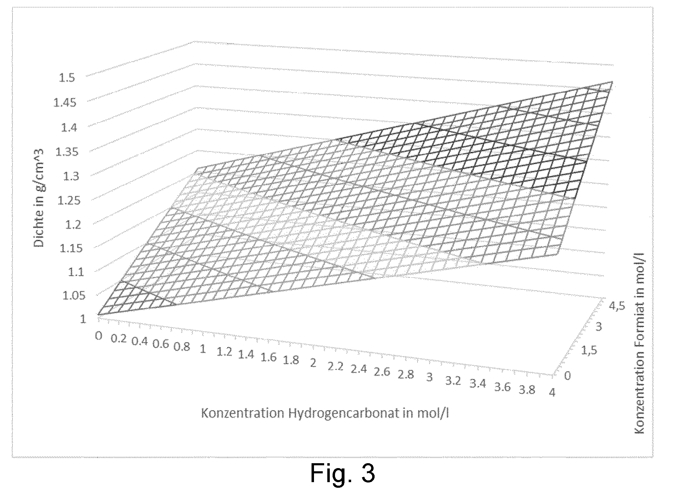

Fig. 3 zeigt die räumliche Auftragung des Parameterraums der Dichte, die sich bei konstanter Temperatur und keinem Carbonatinhalt ergibt.

Die Leitfähigkeit wurde ebenfalls durch einen funktionellen Zusammenhang (II) beschrieben (Kaliumsalze): $\begin{matrix}σ \left[\frac{mS}{cm}\right] = - 64 , 4562579 \\ + 71 , 86422026 ∗ {c}_{{KHCO}_{3}} \\ - 7 , 618317312 ∗ {{c}_{{KHCO}_{3}}}^{2} \\ + 83 , 17383291 ∗ {c}_{{KHCO}_{2}} \\ - 14 , 79958117 ∗ {c}_{{KHCO}_{3}} ∗ {c}_{{KGCO}_{2}} \\ - 6 , 688676601 ∗ {{c}_{{KHCO}_{2}}}^{2} \\ + 148 , 0012860 ∗ {c}_{{K}_{2} {CO}_{3}} \\ - 26 , 29481480 ∗ {c}_{{KHCO}_{3}} ∗ {c}_{{K}_{2} {CO}_{3}} \\ - 26 , 22899225 ∗ {c}_{{KHCO}_{2}} ∗ {c}_{{K}_{2} {CO}_{3}} \\ - 24 , 32726600 ∗ {{c}_{{K}_{2} {CO}_{3}}}^{2} \\ + 3 , 335192560 ∗ T \left[°C\right]\end{matrix}$ (II)
*c*_{*KHCO*3} = *Kaliumhydrogencarbonat*
*c*_{*KHCO*₂} = *Kaliumformiat*
*c*_{*K*₂*CO*₃} = *Kaliumcarbonat*

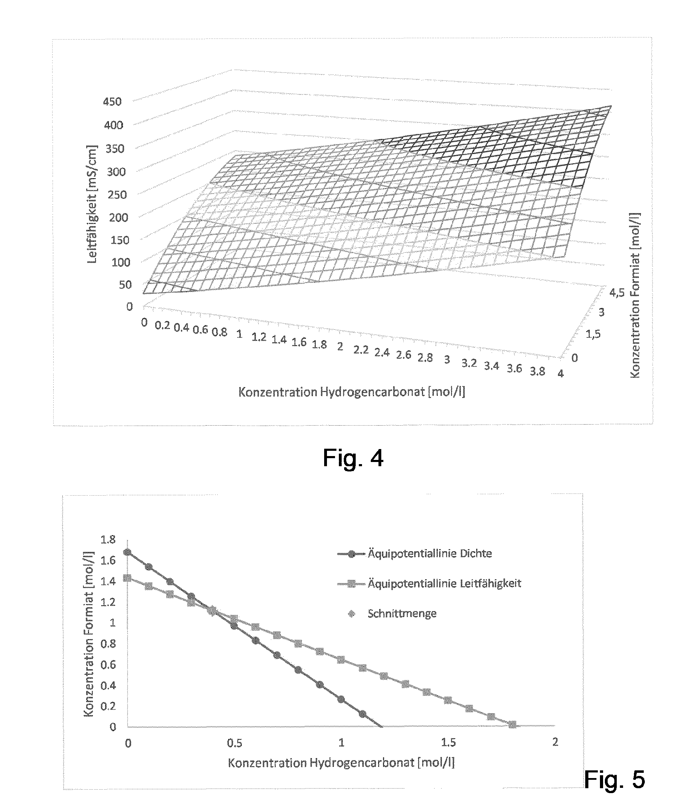

Wie aus Fig. 4 ersichtlich, ergibt sich unter der Annahme einer konstanten Temperatur und der Vernachlässigung der Carbonatkonzentration auch hier für die Leitfähigkeit eine Fläche im dreidimensionalen Raum.

Aus der Schnittmenge der beiden durch die Messergebnisse eingeengten Parameterräume (Isolinien) bzw. Lösung des Gleichungssystems ergibt sich die eindeutige Konzentrationspaarung (Fig. 5).

In einer bevorzugten Ausführungsform werden entweder drei erfasste Stoffeigenschaften und funktionelle Zusammenhänge zwischen jeweils einer Stoffeigenschaft und wässrigen Konzentrationen der Komponenten oder zwei erfasste Stoffeigenschaften und funktionelle Zusammenhänge zwischen jeweils einer Stoffeigenschaft und wässrigen Konzentrationen der Komponenten sowie die Randbedingung b. angewendet. In dieser Ausführungsform kann durch die zusätzliche Ermittlung des Carbonatanteils in der Lösung die Nebenproduktbildung permanent quantifiziert und somit überwacht werden. Carbonat wird in der Folgereaktion gebildet, in welcher sich das Hydrogencarbonat thermisch zu Kohlenstoffdioxid und Carbonat zersetzt. Eine derartige Nebenproduktanalyse ist ein erheblicher Vorteil für die Regelung des Prozesses und somit für den wirtschaftlichen und kohlenstoffdioxidfreien Betrieb der Wasserstoffspeicheranlage. Des Weiteren kann auch die absolute Wasserstoffspeicherdichte der Salzlösung bestimmt werden. Die maximal mögliche Wasserstoffspeicherdichte variiert für das erfindungsgemäße Formiat/Hydrogencarbonat-Speichersystem maßgeblich durch unterschiedliche Gesamtkonzentrationen der Salze. Die absolute Konzentration der Salze in wässriger Phase kann somit in vorteilhafter Weise nach Bedarf verändert werden und somit auch die Wasserstoffspeicherdichte des Systems beeinflusst werden.

In dem erfindungsgemäßen Verfahren fungieren dabei das Formiat als die beladene Wasserstoffträgersubstanz, die auch als hydrierte Form bezeichnet wird und das Hydrogencarbonat als die unbeladene Wasserstoffträgersubstanz, die auch als dehydrierte Form bezeichnet wird.

In einer bevorzugten Ausführungsform des Verfahrens sind die Gegenionen A₁, A₂ und A₃ ausgewählt aus der Gruppe Alkalimetalle, Erdalkalimetalle, Ammonium-lon (NH₄⁺) oder Ammoniumgruppen (NH₃⁺-R) umfassen, wobei R eine beliebige organische Gruppe ist, vorzugsweise eine Alkyl, Alkenyl oder Amin-Gruppe. In einer bevorzugten Ausführungsform ist R ein Aminosäurerest, zB Lysin, Arginin oder Histidin.

Vorzugsweise sind die Gegenionen ausgewählt aus der Gruppe Natrium (Na⁺), Kalium (K⁺), Lithium (Li⁺), Cäsium (Cs⁺). Vorzugsweise sind alle Gegenionen gleich, zB alle Kalium oder alle Natrium. Vorzugsweise entsprechen die Gegenionen im wässrigen Reaktionssystem denen, die in Refenzlösungen benutzt werden.

In einer bevorzugten Ausführungsform des Verfahrens wird eine Stoffeigenschaft des wässrigen Reaktionssystems ausgewählt aus der Gruppe: Dichte, optischer Brechungsindex, elektrische Leitfähigkeit, elektrische Permittivität, Schallgeschwindigkeit, pH-Wert, Absorption, Adsorption, Viskosität oder einer Stoffeigenschaft die aus diesen ableitbar ist. In einer bevorzugten Ausführungsform werden alle im Verfahren erfasste und angewendete Stoffeigenschaften aus dieser Gruppe entnommen.

Beispielhafte Messmethoden zu den aufgeführten Stoffeigenschaften finden sich in der Tabelle 1 wieder.

**Tabelle 1: Messmethoden der aufgeführten Stoffeigenschaften**

| **Stoffeigenschaft** | **bevorzugte Messmethode** | **Messgerät** | **Ungenauigkeit** |
|---|---|---|---|
| Dichte | Pyknometer, Hydrometer, Vibrationsdichtemesser | Anton Paar DAS 5000 M | 0,005 g/cm^3 |
| Optischer Brechungsindex | Refraktometer, Interferometer, Ellipse- und Zirkular-Polarimetrie | Kern ORF 1RS | 0,003 |
| Elektrische Leitfähigkeit | Induktive Leitfähigkeitsmessung, Impedanzspektroskopie, Leitfähigkeitszellen | WTW MultiLab 540 | 1 mS/cm |
| Elektrische Permittivität | Kondensator-Methode, Resonanzmethode, Wellenleiter-Methode, Quasistatische Kapazitätsmessung, Ring-Resonator-Methode, Zeitbereichsreflektometer | | |
| Schallgeschwindigkeit | Puls-Echo-Methode, Resonanzmethode, Durchschallungsverfahren, Phasenvergleichsmethode, Zeitbereichsreflektometer, Doppler-Effekt-Methode | Anton Paar DAS 5000 M | 1 m/s |
| pH-Wert | pH-Elektrode, pH-Teststreifen, flüssige pH Indikatoren | WTW pH 320 (Gerät), SenTix 81 Standard PH electrode (Elektrode) | 0,01 |
| Absorption | Spektrophotometrie, Massenbilanzmethode | | |
| Adsorption | Adsorptionschromatograpie, Röntgen-Photoelektronenspektroskopie, Chromatographie | | |
| Viskosität | Kapillarviskosimeter, Kugelfall-Viskosimeter, Rotationsviskosimeter, Vibrationsviskosimeter, Strömungsviskosimeter | Lovis 2000 M | 0,01 mPas |

Unter der Stoffeigenschaft der Adsorption der Flüssigkeit wird die Adsorptionsfähigkeit der Flüssigkeit, oder die Adsorptionsfähigkeit von einem oder mehreren hydrierbaren flüssigen Wasserstoffträgern der Flüssigkeit, an eine Festkörperoberfläche bezeichnet. Unter der Stoffeigenschaft der Absorption der Flüssigkeit wird die Absorptionsfähigkeit der Flüssigkeit hinsichtlich Gase verstanden. So verändern die unterschiedlichen Salzkonzentrationen die Löslichkeiten von unterschiedlichen Gasen, insbesondere Kohlenstoffdioxid, in der Salzlösung.

In einer bevorzugten Ausführungsform wird zu der Erfassung der mindestens einen Stoffeigenschaft und dem entsprechenden funktionellen Zusammenhang dieselbe Messmethode angewendet.

In einer bevorzugten Ausführungsform des Verfahrens kann eine Stoffeigenschaft des wässrigen Reaktionssystems die Dichte sein, wobei die Dichte durch eine Schwingungsmessung, eine hydrostatische Wägung, mittels eines Pyknometers oder eines Aräometers bestimmt werden kann. Hierdurch kann eine Messung des Hydriergrads der Flüssigkeit im Labor als auch in technischen Ausführungsformen durchgeführt werden, wobei die Dichte des wässrigen Reaktionssystems mit einer hohen Präzision bestimmt werden kann.

In einer bevorzugten Ausführungsform des Verfahrens kann eine Stoffeigenschaft des wässrigen Reaktionssystems die elektrische Leitfähigkeit sein, welche mit Leitfähigkeitszellen ebenfalls kosteneffizient gemessen werden kann. Der vorteilhafte Messbereich ist dabei zwischen 50-200 mS/cm anzutreffen.

In einer bevorzugten Ausführungsform ist die Dichte eine erste und die elektrische Leitfähigkeit eine zweite Stoffeigenschaft des wässrigen Reaktionssystems.

Gemäß einem zweiten Aspekt der Erfindung wird die Aufgabe durch eine Vorrichtung (100) zur Ausführung des Verfahrens des ersten Aspektes gelöst, wobei die Vorrichtung (100) eine Erfassungseinrichtung (110) zum Erfassen von mindestens einer Stoffeigenschaft des wässrigen Reaktionssystems und eine Bestimmungseinrichtung (120) zum Bestimmen des Hydriergrades auf Basis der mindestens einen erfassten Stoffeigenschaft des wässrigen Reaktionssystems sowie den optionalen Randbedingungen umfasst.

In einer bevorzugten Ausführungsform der Vorrichtung kann die Erfassungseinrichtung (110) ausgebildet sein, eine der Stoffeigenschaften aus der folgenden Gruppe zu erfassen: Dichte, optischer Brechungsindex, elektrische Leitfähigkeit, elektrische Permittivität, Schallgeschwindigkeit, pH-Wert, Absorption, Adsorption, Viskosität oder einer Stoffeigenschaft die aus diesen ableitbar ist.

In einer bevorzugten Ausführungsform der Vorrichtung kann eine Stoffeigenschaft die Dichte des wässrigen Reaktionssystems sein, welche durch eine Schwingungsmessung, eine hydrostatische Wägung, mittels eines Pyknometers oder eines Aräometers ermittelt werden kann.

In einer bevorzugten Ausführungsform der Vorrichtung kann eine Stoffeigenschaft die elektrische Leitfähigkeit des wässrigen Reaktionssystems sein, welche durch Leitfähigkeitszellen, induktive Leitfähigkeitsmessung oder Impedanzspektroskopie ermittelt werden kann.

In einer bevorzugten Ausführungsform der Vorrichtung umfasst die Vorrichtung (100) eine Erfassungseinrichtung (110) zum Erfassen von Daten des wässrigen Reaktionssystems in einem Behälter, insbesondere Gewicht, Volumen, elektrische Leitfähigkeit. Dadurch wird beispielsweise der technische Vorteil erreicht, dass die Menge des wässrigen Reaktionssystems für weitere Berechnungen herangezogen werden kann. Dadurch kann eine effiziente und genaue Bestimmung des Hydriergrads des wässrigen Reaktionssystems in dem Behälter durchgeführt werden.

In einer bevorzugten Ausführungsform der Vorrichtung kann die Erfassungseinrichtung (110) ein Aräometer, ein Pyknometer, eine hydrostatische Waage oder eine Einrichtung zur Schwingungsmessung, insbesondere einen Biegeschwinger umfassen. Dadurch wird beispielsweise der technische Vorteil erreicht, dass die Dichte mit einer hohen Präzision bestimmt werden kann.

In einer weiteren Ausführungsform der Vorrichtung umfasst die Vorrichtung eine Berechnungseinrichtung zum Berechnen einer gespeicherten oder speicherbaren Energiemenge in dem Behälter auf Basis des Hydriergrades und der Menge des wässrigen Reaktionssystems. Dadurch wird beispielsweise der technische Vorteil erreicht, dass der Energieinhalt des Behälters einem Benutzer angezeigt werden kann, wodurch der Benutzer den verbleibenden Energieinhalt des wässrigen Reaktionssystems in dem Behälter besser einschätzen kann.

In einer vorteilhaften Ausführungsform der Vorrichtung kann die Erfassungseinrichtung ein Gerät zu Messung der elektrischen Leitfähigkeit umfassen, wie beispielsweise eine Leitfähigkeitszelle, eine induktive Leitfähigkeitsmessung oder ein Impedanzspektrometer.

Gemäß einem dritten Aspekt der Erfindung wird die Aufgabe durch einen Behälter gelöst, welcher ein wässrigen Reaktionssystems der Komponenten Formiatsalz (A₁HCOO), Hydrogencarbonatsalz (A₂HCO₃), und Carbonatsalz (A₃CO₃), wobei A₁, A₂ und A₃ Gegenionen sind, sowie die Vorrichtung nach dem zweiten Aspekt beinhaltet.

Das wässrige Reaktionssystem kann wie im ersten Aspekt beschrieben näher definiert werden.

### Detaillierte Beschreibung von Ausführungsbeispielen

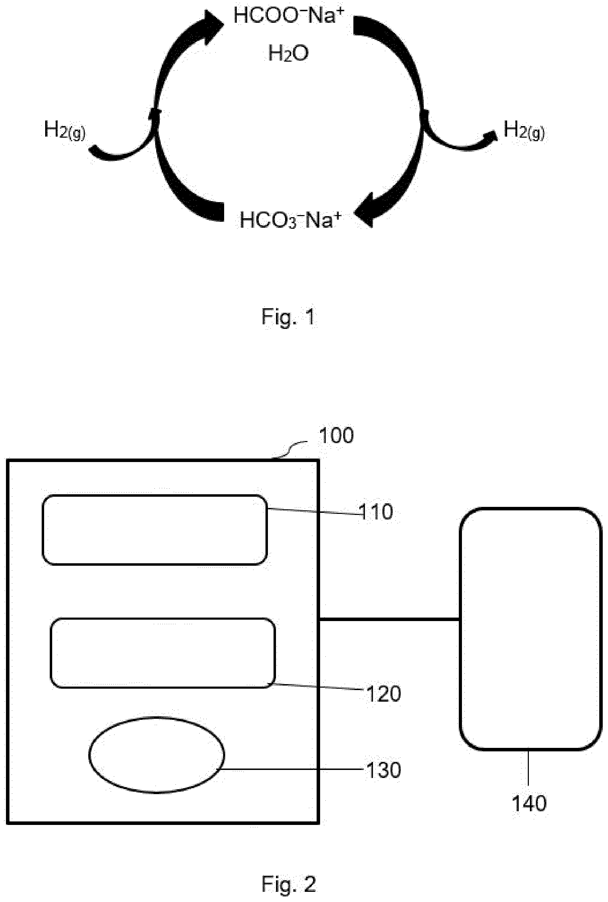

Fig. 1 zeigt eine schematische Darstellung des Formiat/Hydrogencarbonat-Reaktionssystems zu Beladung und Entladung von Wasserstoff im wässrigen Reaktionssystem. Dabei fungieren die Stoffe Formiat- und Hydrogencarbonatsalze als Wasserstoffträger, welche reversibel Wasserstoff binden können. Hierbei ist das Hydrogencarbonat der unbeladene Wasserstoffträger, welcher mittels des Wasserstoffs zu Formiat und Wasser reagiert und auf diese Weise beladen wird. Folglich kann der beladene Wasserstoffträger, das Formiat, mit Wasser wieder in den entladenen Wasserträger, das Hydrogencarbonat, zurückgeführt werden. Wasserstoff wird dadurch wieder freigesetzt. Der flüssige Wasserstoffträger ist dabei Transporteur für Energie in Form von Wasserstoff.

Aufgrund des chemischen Gleichgewichts von Carbonat, Hydrogencarbonat und Kohlenstoffdioxid, liegen neben dem entladenen Wasserstoffträgermaterial (Hydrogencarbonat) auch andere Carbonat-Spezies in der Lösung zur Wasserstoffspeicherung vor. Gerade durch die Folgereaktion des Hydrogencarbonats zum Carbonat, kann sich das Verhältnis der Carbonat-Spezies verändern. Die Verteilung dieser kann ergänzend mittels der genannten Stoffeigenschaften des wässrigen Reaktionssystems und optional den Randbedingungen bestimmt werden.

Im Falle einer Lösung aus zwei Komponenten (Formiat und Hydrogencarbonat) reicht die Korrelation (I) und (II) der beiden Parameterräume Dichte und Leitfähigkeit aus. Hierbei wird die Randbedingung a. angewendet, dass die Carbonatkonzentration vernachlässigt wird. $\begin{matrix}ρ \left[\frac{g}{{cm}^{3}}\right] = 1 , 015134164 \\ + 0 , 057475788 ∗ {c}_{{KHCO}_{3}} \\ + 0 , 040514213 ∗ {c}_{{KHCO}_{2}} \\ + 0 , 103596824 ∗ {c}_{{K}_{2} {CO}_{3}} \\ - 0 , 000411644 ∗ T \left[°C\right]\end{matrix}$ (I) $\begin{matrix}σ \left[\frac{mS}{cm}\right] = - 64 , 4562579 \\ + 71 , 86422026 ∗ {c}_{{KHCO}_{3}} \\ - 7 , 618317212 ∗ {{c}_{{KHCO}_{3}}}^{2} \\ + 83 , 17383291 ∗ {c}_{{KHCO}_{2}} \\ - 14 , 79958117 ∗ {c}_{{KHCO}_{3}} ∗ {c}_{{KHCO}_{2}} \\ - 6 , 688676601 ∗ {{c}_{{KHCO}_{2}}}^{2} \\ + 148 , 00112860 ∗ {c}_{{K}_{2} {CO}_{3}} \\ - 26 , 29481480 ∗ {c}_{{KHCO}_{3}} ∗ {c}_{{K}_{2} {CO}_{3}} \\ - 26 , 22899225 ∗ {c}_{{KHCO}_{2}} ∗ {c}_{{K}_{2} {CO}_{3}} \\ - 24 , 32726600 ∗ {{c}_{{K}_{2} {CO}_{3}}}^{2} \\ + 3 , 335192560 ∗ T \left[°C\right]\end{matrix}$ (II)
*c*_{*KHCO*₃} = *Kaliumhydrogencarbonat* in mol/l
*c*_{*KHCO*₂} = *Kaliumformiat* in mol/l
*c*_{*K*₂*CO*₃} = *Kaliumcarbonat* in mol/l

### Beispiellösung 1

Konzentration Formiat in Lösung: 1,12 mol/l
Konzentration Hydrogencarbonat in Lösung: 0,4 mol/l
Gemessene Dichte bei 20 °C: 1,075 g/cm³
Gemessene Leitfähigkeit bei 20,8 °C: 110,3 mS/cm

### Lösung des Gleichungssystems aus (I) and (II) bzw. Überlappung der eingeengten Parameterräume:

Berechnete Konzentration Formiat: 1,12 mol/l
Berechnete Konzentration Bicarbonat: 0,4 mol/l

Ebenso kann die Randbedingung b. angewendet werden und die Formiatkonzentration kann ausgehend von den Startkonzentrationen und dem Reaktionsverlauf sowie den ist-Konzentrationen von Carbonat und Hydrogencarbonat bestimmt werden. Dabei wird die folgende Formel angewendet. ${c}_{{KHCO}_{2}} = \left({c}_{Start , {KHCO}_{2}}-{c}_{Start , {KHCO}_{3}}\right) - {c}_{{KHCO}_{3}} - 2 ∗ \left({c}_{Start , {K}_{2} {CO}_{3}}-{c}_{{K}_{2} {CO}_{3}}\right)$
*c*_{*KHCO*₃} = *Kaliumhydrogencarbonat* in mol/l
*c*_{*KHCO*₂} = *Kaliumformiat* in mol/l
*c*_{*K*₂*CO*₃} = *Kaliumcarbonat* in mol/l

### Salzlösung 2

Konzentration Formiat in Lösung: 1,51 mol/l
Konzentration Hydrogencarbonat in Lösung: 1 mol/l
Konzentration Carbonat in Lösung: 1 mol/l
Gemessene Dichte bei 20,9 °C: 1,229 g/cm³
Gemessene Leitfähigkeit bei 20,9 °C: 216,1 mS/cm
Ausgangskonzentration Formiat: 1,01 mol/l
Ausgangskonzentration Bicarbonat: 3,5 mol/l
Ausgangskonzentration Carbonat: 0 mol/l

### Lösung des Gleichungssystems aus (I) and (II) bzw. Überlappung der eingeengten Parameterräume:

Berechnete Konzentration Formiat: 1,70 mol/l
Berechnete Konzentration Bicarbonat: 1,08 mol/l
Berechnete Konzentration Carbonat: 0,88 mol/l

Fig. 2 zeigt eine schematische Ansicht einer Vorrichtung 100 zum Erfassen eines Hydriergrades. Die Vorrichtung 100 kann ein oder mehrere Erfassungseinrichtungen 110 zum Erfassen einer Stoffeigenschaft des wässrigen Reaktionssystems umfassen, wie beispielsweise eine Dichte-Erfassungseinrichtung 110 und eine Erfassungseinheit 110 für die elektrische Leitfähigkeit des wässrigen Reaktionssystems. Weiter kann die Erfassungseinrichtung 100 eine Bestimmungseinrichtung 120 zum Bestimmen des Hydriergrades auf Basis der erfassten Stoffeigenschaft der Flüssigkeit umfassen. Beide thermophysikalischen Messgrößen sind auf einfache Weise zu messen. Die Bestimmungseinrichtung 120 kann beispielsweise durch einen Prozessor 130 mit einem Speicher gebildet sein, der die Ausführung mathematischer Operationen zulässt. Die Vorrichtung 100 kann an einem Behälter 140 angebracht sein und dazu dienen anzugeben, wie hoch der Hydriergrad des wässrigen Reaktionssystems im Behälter 140 ist.

Die Anwendungsgebiete des erfindungsgemäßen Verfahrens sind aufgrund der positiven Eigenschaften breit gefächert. Durch die geringen toxikologischen Eigenschaften, die drucklose Lagerung und die nicht Entflammbarkeit beider Salze sind die ausgehenden Gefahrenpotentiale bei der Wasserstoffspeicherung gering. Aus diesem Grund eignet sich die Energiespeichertechnologie nicht nur für stationäre Anwendungen zum Beispiel zur autarken Versorgung von Siedlungen, Quartieren oder Dörfern, sondern auch für den globalen Transport von Wasserstoff.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### Bezugszeichenliste

- 100: Vorrichtung
- 110: Erfassungseinrichtung
- 120: Bestimmungseinrichtung
- 130: Prozessor
- 140: Behälter

## Patentansprüche

1. Verfahren zum Bestimmen des Hydriergrades eines wässrigen Reaktionssystems der Komponenten Formiatsalz (A₁HCOO), Hydrogencarbonatsalz (A₂HCO₃), und Carbonatsalz (A₃CO₃), wobei A₁, A₂ und A₃ Gegenionen sind, mit den Schritten:
- Erfassung von mindestens einem funktionellen Zusammenhang zwischen jeweils einer Stoffeigenschaft und wässrigen Konzentrationen der Komponenten;
- Erfassung von mindestens einer Stoffeigenschaft des wässrigen Reaktionssystems;
- Bestimmen der Konzentrationen von den Komponenten des wässrigen Reaktionssystems durch
(i) den mindestens einen funktionellen Zusammenhang und der mindestens einen erfassten Stoffeigenschaft des wässrigen Reaktionssystems und,
optional, (ii) eine oder mehr Randbedingungen,
wobei die Summe der mindestens einen erfassten Stoffeigenschaften des wässrigen Reaktionssystems und der einen oder mehr Randbedingungen der Anzahl der Komponenten des wässrigen Reaktionssystems entspricht; und
- Bestimmen des Hydriergrades des wässrigen Reaktionssystems aus den Konzentrationen der Komponenten des wässrigen Reaktionssystems,
wobei der Hydriergrad das Verhältnis der Formiatkonzentration zur Summe aus Formiat-, und Hydrogencarbonatkonzentration widerspiegelt.

2. Verfahren nach Anspruch 1, wobei die Gegenionen A₁, A₂ und A₃ Kationen ausgewählt aus der Gruppe Alkalimetalle, Erdalkalimetalle, Ammonium-Ion (NH₄⁺) oder Ammoniumgruppen (NH₃⁺-R) umfassen, vorzugsweise wobei A₁, A₂ und A₃ gleich sind.

3. Verfahren nach Anspruch 1 oder 2, wobei die Gegenionen A₁, A₂ oder A₃ Kationen ausgewählt aus der Gruppe Natrium (Na⁺), Kalium (K⁺), Lithium (Li⁺), Cäsium (Cs⁺) umfassen.

4. Verfahren nach Anspruch 1, wonach eine oder mehr Randbedingungen
a. die Vernachlässigung der Carbonatkonzentration, und/oder
b. die Ermittlung einer Komponentenkonzentration ausgehend von den Startkonzentrationen der Komponenten und dem Reaktionsverlauf sind,
wobei wenn zwei Randbedingungen zum Bestimmen der Konzentrationen von den Komponenten des wässrigen Reaktionssystems benutzt werden, eine Randbedingung die Vernachlässigung der Carbonatkonzentration ist.

5. Verfahren nach einem der vorstehenden Ansprüche, wonach eine Stoffeigenschaft des wässrigen Reaktionssystems ausgewählt ist aus der Gruppe: Dichte, optischer Brechungsindex, elektrische Leitfähigkeit, elektrische Permittivität, Schallgeschwindigkeit, pH-Wert, Absorption, Adsorption, Viskosität oder einer Stoffeigenschaft, die aus diesen ableitbar ist.

6. Verfahren nach einem der vorstehenden Ansprüche, wonach eine Stoffeigenschaft des wässrigen Reaktionssystems die Dichte ist und diese durch eine Schwingungsmessung, eine hydrostatische Wägung, mittels eines Pyknometers oder eines Aräometers ermittelt wird.

7. Verfahren nach einem der vorstehenden Ansprüche, wonach eine Stoffeigenschaft des wässrigen Reaktionssystems die elektrische Leitfähigkeit ist und diese durch Induktive Leitfähigkeitsmessung, Impedanzspektroskopie oder Leitfähigkeitszellen ermittelt wird.

8. Verfahren nach einem der vorstehenden Ansprüche, wonach eine erste Stoffeigenschaft des wässrigen Reaktionssystems die Dichte ist und eine zweite Stoffeigenschaft die elektrische Leitfähigkeit ist.

9. Verfahren nach einem der vorstehenden Ansprüche, wonach der mindestens eine funktionelle Zusammenhang zwischen einer Stoffeigenschaft und wässrigen Konzentrationen der Komponenten linear oder nicht-linear ist.

## Claims

1. Method for determining the hydrogenation degree of an aqueous reaction system of the components formate salt (A₁HCOO), hydrogen carbonate salt (A₂HCO₃), and carbonate salt (A₃CO₃), wherein A₁, A₂ and A₃ are counterions, said method comprising the steps of:
- identifying at least one functional relationship between in each case one substance property and aqueous concentrations of the components;
- identifying at least one substance property of the aqueous reaction system;
- determining the concentrations of the components of the aqueous reaction system by means of
(i) the at least one functional relationship and the at least one identified substance property of the aqueous reaction system and,
optionally, (ii) one or more boundary conditions, wherein the sum of the at least one identified substance properties of the aqueous reaction system and the one or more boundary conditions corresponds to the number of components of the aqueous reaction system;
and
- determining the hydrogenation degree of the aqueous reaction system from the concentrations of the components of the aqueous reaction system,
wherein the hydrogenation degree reflects the ratio of the formate concentration to the sum of the formate and hydrogen carbonate concentration.

2. Method according to claim 1, wherein the counterions A₁, A₂ and A₃ comprise cations selected from the group consisting of alkali metals, alkaline earth metals, ammonium ion (NH₄⁺) or ammonium groups (NH₃⁺-R), preferably wherein A₁, A₂ and A₃ are the same.

3. Method according to claim 1 or 2, wherein the counterions A₁, A₂ or A₃ comprise cations selected from the group consisting of sodium (Na⁺), potassium (K⁺), lithium (Li⁺), caesium (Cs⁺).

4. Method according to claim 1, according to which one or more boundary conditions are
(a) the disregarding of the carbonate concentration, and/or
(b) the ascertaining of the component concentration based on the starting concentrations of the components and the course of the reaction,
wherein one boundary condition is the disregarding of the carbonate concentration if two boundary conditions are used to determine the concentrations of the components of the aqueous reaction system.

5. Method according to any of the preceding claims, according to which a substance property of the aqueous reaction system is selected from the group consisting of: density, optical refractive index, electrical conductivity, electrical permittivity, speed of sound, pH value, absorption, adsorption, viscosity or a substance property that can be derived from these.

6. Method according to any of the preceding claims, according to which a substance property of the aqueous reaction system is the density and this is ascertained by means of a vibration measurement, hydrostatic weighing, using a pycnometer or an areometer.

7. Method according to any of the preceding claims, according to which a substance property of the aqueous reaction system is the electrical conductivity and this is ascertained by means of inductive conductivity measurement, impedance spectroscopy or conductivity cells.

8. Method according to any of the preceding claims, according to which a first substance property of the aqueous reaction system is the density and a second substance property is the electrical conductivity.

9. Method according to any of the preceding claims, according to which the at least one functional relationship between a substance property and aqueous concentrations of the components is linear or non-linear.

## Revendications

1. Procédé de détermination du degré d'hydrogénation d'un système réactionnel aqueux des composants sel de formiate (A₁HCOO), sel de carbonate d'hydrogène (A₂HCO₃), et sel de carbonate (A₃CO₃), dans lequel A₁, A₂ et A₃ sont des ions compensateurs, comprenant les étapes suivantes :
- la détection d'au moins une relation fonctionnelle entre chacune parmi une propriété de substance et des concentrations aqueuses des composants ;
- la détection d'au moins une propriété de substance du système réactionnel aqueux ;
- la détermination des concentrations des composants du système réactionnel aqueux par
(i) l'au moins une relation fonctionnelle et l'au moins une propriété de substance détectée du système réactionnel aqueux et,
facultativement, (ii) une ou plusieurs conditions limites,
dans lequel la somme des au moins une propriété de substance détectée du système réactionnel aqueux et des une ou plusieurs conditions limites correspond au nombre de composants du système réactionnel aqueux ; et
- la détermination du degré d'hydrogénation du système réactionnel aqueux à partir des concentrations des composants du système réactionnel aqueux,
dans lequel le degré d'hydrogénation reflète le rapport entre la concentration de formiate et la somme des concentrations de formiate et de carbonate d'hydrogène.

2. Procédé selon la revendication 1, dans lequel les ions compensateurs A₁, A₂ et A₃ comprennent des cations choisis dans le groupe des métaux alcalins, des métaux alcalino-terreux, des ions ammonium (NH₄⁺) ou des groupes ammonium (NH₃⁺-R), de préférence dans lequel A₁, A₂ et A₃ sont identiques.

3. Procédé selon la revendication 1 ou la revendication 2, dans lequel les ions compensateurs A₁, A₂ ou A₃ comprennent des cations choisis dans le groupe sodium (Na⁺), potassium (K⁺), lithium (Li⁺), césium (Cs⁺).

4. Procédé selon la revendication 1, selon lequel une ou plusieurs conditions limites sont
a. la négligence de la concentration en carbonate, et/ou
b. l'obtention d'une concentration de composants à partir des concentrations initiales des composants et du déroulement de la réaction,
dans lequel, lorsque deux conditions limites sont utilisées pour déterminer les concentrations des composants du système réactionnel aqueux, une condition limite est la négligence de la concentration en carbonate.

5. Procédé selon l'une quelconque des revendications précédentes, selon lequel une propriété de substance du système réactionnel aqueux est sélectionnée dans le groupe comprenant :
masse volumique, indice de réfraction optique, conductivité électrique, permittivité électrique,
vitesse du son, pH, absorption, adsorption, viscosité ou une propriété de substance qui en découle.

6. Procédé selon l'une quelconque des revendications précédentes, selon lequel une propriété de substance du système réactionnel aqueux est la masse volumique, qui est obtenue par une mesure des vibrations, une pesée hydrostatique, un pycnomètre ou un aréomètre.

7. Procédé selon l'une quelconque des revendications précédentes, selon lequel la conductivité électrique est une propriété de substance du système réactionnel aqueux et que celle-ci est obtenue par mesure de conductivité inductive, spectroscopie d'impédance ou des cellules de conductivité.

8. Procédé selon l'une quelconque des revendications précédentes selon lequel une première propriété de substance du système réactionnel aqueux est la masse volumique et une deuxième propriété de substance est la conductivité électrique.

9. Procédé selon l'une quelconque des revendications précédentes, selon lequel l'au moins une relation fonctionnelle entre une propriété de substance et des concentrations aqueuses des composants est linéaire ou non linéaire.
